# EUROPÄISCHE PATENTSCHRIFT

(11) **EP 2 891 236 B1**
(45) Veröffentlichungstag und Bekanntmachung des Hinweises auf die Patenterteilung: **24.11.2021**
(21) Anmeldenummer: 13750687.9
(22) Anmeldetag: 15.08.2013
(51) Int. Cl.: H02K 23/04, H02K 1/17, H02K 7/116

(54) **ELEKTRISCHE MASCHINE ZUM MOTORISCHEN VERSTELLEN BEWEGLICHER TEILE IM KRAFTFAHRZEUG, SOWIE VERFAHREN ZUM HERSTELLEN DER ELEKTRISCHEN MASCHINE**
ELECTRICAL MACHINE FOR ADJUSTING MOVING PARTS IN A MOTOR VEHICLE BY MOTOR, AND ALSO METHOD FOR PRODUCING THE ELECTRICAL MACHINE
MACHINE ÉLECTRIQUE SERVANT AU RÉGLAGE MOTORISÉ DE PIÈCES MOBILES DANS UN VÉHICULE À MOTEUR, ET PROCÉDÉ DE FABRICATION DE LA MACHINE ÉLECTRIQUE

(30) Priorität: 28.08.2012 DE 202012012484 U; 04.09.2012 DE 202012012483 U; 01.02.2013 DE 102013201715
(43) Veröffentlichungstag der Anmeldung: 08.07.2015
(73) Patentinhaber: Robert Bosch GmbH, 70442 Stuttgart (DE)
(72) Erfinder: MILI, Tarek, F-67630 Lauterbourg (FR); KUSSEROW, Peter, 77815 Buehl (DE); ROOS, Gerald, 77855 Achern (DE); LAUK, Detlef, 77871 Renchen (DE)
(86) Internationale Anmeldenummer: PCT/EP2013/067068
(87) Internationale Veröffentlichungsnummer: WO 2014/032982

(56) Entgegenhaltungen:
- EP-A1- 1 154 541
- EP-A2- 2 131 473
- EP-B1- 1 154 541
- DE-A1-102009 033 623
- DE-B- 1 071 214
- US-A- 4 372 035
- None

## Beschreibung

### Stand der Technik

Die Erfindung geht aus von einer elektrischen Maschine, sowie einem Verfahren zum Herstellen der elektrischen Maschine nach der Gattung der unabhängigen Ansprüche.

Mit der US 4,372,035 ist ein Elektromotor bekannt geworden, bei dem in einem Polgehäuse zwei gegenüberliegende Permanentmagnete und zwischen diesen zwei so genannte Folgepole angeordnet sind. Zur Ausbildung der Folgepole ist in der Polgehäusewand eine Kontur ausgeformt, deren bogenförmige Innenfläche den gleichen Abstand zum Rotor hat, wie die schalenförmigen Permanentmagnete. Der Fachmann bekommt hierbei keinen Hinweis, das Gewicht und die Leistungsdichte des Elektromotors bezüglich eines zur Verfügung stehenden Bauraums für konkrete Anwendungsfälle zu optimieren. Die DE 102009033623 A1 zeigt einen Elektromotor, der eine abgeflachte Folgepolkontur aufweist. Dabei sind die abgeflachten Seitenflächen zwischen den Permanentmagneten mit einer geringen Wölbung ausgebildet. Mit der DE 1071214 B ist ein Elektromotor bekannt geworden, bei dem ebenfalls zwischen zwei radial gegenüberliegenden Permanentmagneten ein Folgepolpaar ausgebildet ist. Hierzu sind in dem abgeflachten Bereich zwischen der Permanentmagneten Sicken eingeprägt. Die EP 1154541 A1 zeigt einen Elektromotor in konventioneller Bauweise ohne Folgepole, bei denen das Polgehäuse mittels eines Tiefziehprozess hergestellt wird. Dabei wird ein einstückig geschlossener Poltopfboden mit einer Lageraufnahme und gegenüberliegend ein Anschlussflansch angeformt.

### Offenbarung der Erfindung

### Vorteile der Erfindung

Die erfindungsgemäße elektrische Maschine, sowie das erfindungsgemäße Verfahren zum Herstellen einer solchen Maschine mit den Merkmalen der unabhängigen Ansprüche 1, 13 und 14 haben demgegenüber den Vorteil, dass durch die Ausbildung einer maximalen Schlüsselweite des Polgehäuses zwischen den Seiten mit den beiden gegenüberliegenden Folgepolen das Gewicht und die Leistungsdichte für Verstellantriebe im Kraftfahrzeug optimiert werden kann. Insbesondere bei Anwendungen mit einem geringen zur Verfügung stehenden Einbauraum, wie beispielsweise Schiebedachantriebe, Sitzverstellung, Heckklappenverstellung, Fensterheberantriebe und (Heck-)Wischermotoren, kann durch die Auslegung des Polgehäuses auf eine maximale Schlüsselweite von 35 mm bzw. in Abhängigkeit von dem notwendigen Drehmoment von maximal 30 mm ein universeller Verstellantrieb für verschiedene Anwendungen zur Verfügung gestellt werden, der bei einer optimalen Bauraumausnutzung die maximale Leistungsdichte liefert. Durch die Wahl des Designs werden gleichzeitig bei optimalem magnetischem Fluss die anregenden Kräfte, die störende Betriebsgeräusche verursachen, wirksam reduziert. Die Folgepole werden besonders günstig durch das Anformen jeweils zweier in Axialrichtung verlaufender Sicken in der Polgehäusewand realisiert. In Umfangsrichtung wird dadurch eine gewölbte Innenkontur gebildet, die magnetisch mit dem Rotor zusammenwirkt. Das Polgehäuse ist vorteilhaft als Poltopf ausgebildet, das an einer Seite ein einteilig mit dem Poltopf ausgebildeten Boden aufweist, der eine Aufnahme für ein Rotorlager aufweist. Die gegenüberliegende offene Poltopfseite weist einen Flansch auf, der nach dem Zusammenbau an einem korrespondierenden Gegenflansch eines weiteren Gehäuseteils anliegt. In einem axialen Bereich zwischen dem Flansch und den Sicken des Folgepols ist ein Übergangsbereich ausgebildet, in dem der Querschnitt des Polgehäuses von der Folgpolkontur mit den Sicken in den Querschnitt des Flansches übergeht, der zwei in etwa parallele Seiten aufweist. Dieser Übergangsbereich wird mittels Tiefziehen ausgebildet und weist beispielsweise eine axiale Länge von 4 mm -13 mm auf.

Durch die in den abhängigen Ansprüchen aufgeführten Maßnahmen sind vorteilhafte Weiterbildungen und Verbesserungen der in den unabhängigen Ansprüchen angegebenen Merkmale möglich. Besonders von Vorteil ist es, die Dicke der Polgehäusewand - insbesondere im Bereich der Folgepole - in etwa 2% - 7% der Schlüsselweite auszubilden, vorzugsweise circa 3% - 4%. Bei diesem Verhältnis der Wandstärke zur Schlüsselweite liegt das Optimum zwischen der Ausbildung eines maximalen magnetischen Fluss für den Antrieb des Rotors und minimalem Gewicht des Polgehäuses bei gleichzeitiger Minimierung der Geräuschanregung aufgrund von Schwingungen des Polgehäuses.

Besonders günstig ist es, wenn die radiale Dicke der Permanentmagneten im Bereich 10% - 25% der Schlüsselweite liegt, bevorzugt näherungsweise 15% - 18%. Bei dieser Auslegung des Magnetkreises kann bei minimalem Gewicht und minimalem Einsatz von teurem Magnetmaterial eine maximale Leistungsdichte bei dem zur Verfügung stehenden Bauraum erzielt werden. Hierbei kann beispielsweise Ferritmaterial für die Magnete verwendet werden, so dass auf die Verwendung Seltenen Erden Magnetmaterialien verzichtet werden kann.

Durch die Anpassung der Bauweise des Rotors an die Schlüsselweite kann der Magnetkreis weiter optimiert werden, indem die Rotorzähne eine tangentiale Zahnschaftbreite im Bereich der Wicklungen von etwa 3% - 10%, bevorzugt näherungsweise 5% - 7% der Schlüsselweite aufweisen. Dieses Verhältnis stellt eine gute Balance zwischen maximalem magnetischen Fluss und der Gewichtsreduktion dar. Auch bei dieser Auslegung wird eine Reduktion von störenden Schwingungsanregungen des magnetischen Systems erzielt. Als besonders günstig hat sich die Verwendung von zehn Rotorzähnen bei 4 Magnetpolen (2 Permanentmagnete und 2 Folgepole) erwiesen.

Um eine durch die Nutung des Rotors verursachte Drehmomentschwankung zu reduzieren, jedoch aber gleichzeitig den magnetischen Fluss zwischen den Permanentmagneten und dem Rotor größtmöglich zu halten, wird die Innenkontur der Permanentmagnete mit unterschiedlichen Radien ausgebildet. Dabei weist ein mittlerer Bereich einen Innenradius auf, der maximal um 15 % größer ist, als der Rotorradius, um hier den Luftspalt möglichst gering zu halten. An den beiden benachbarten Bereichen der Permanentmagnete ist ein größerer Innenradius ausgebildet, der dazu führt, dass die Momentenwelligkeit reduziert wird. Durch die Ausbildung zweier diskreter unterschiedlichen Innenradien, bleibt im Gegensatz zu einer kontinuierlichen Polabhebung ein größerer magnetischer Fluss erhalten.

Dabei ist es vorteilhaft den mittleren Bereich über einen Umfangswinkel von 50° - 60° - insbesondere näherungsweise 54° - auszubilden. Die beiden äußeren Bereiche weisen dabei einen Winkelbereich von circa 15° - 25° auf.

Unmittelbar benachbart zum Flansch ist erfindungsgemäß am Polgehäuse ein Verbindungsbereich ausgebildet, der eine größere maximale Abessung zwischen den abgeflachten Gehäuseseiten aufweist, als die Schlüsselweite. Dieser Verbindungsbereich hat bevorzugt die gleiche Innenkontur, wie der Flansch mit zwei parallelen Innenseiten. Dieser Verbindungsbereich kann vorteilhaft ein Bürstenhalter-Bauteil aufnehmen, das sich axial über die Schnittstelle des Flansches in das benachbarte Gehäuseteil erstreckt. Am Flansch sind beispielsweise Löcher als Aufnahmen für Verbindungselemente - bevorzugt Schrauben oder Nieten - zu einem Getriebegehäuse ausgebildet.

Um die Permanentmagnete erfindungsgemäß besonders einfach im Polgehäuse zu fixieren, werden diese mittels Federelementen gegen die Innenwand gedrückt. Dabei liegen die freien Enden der U-förmigen Feder an in Umfangsrichtung weisende Seitenflächen der Permanentmagnete an. Dazu ist zwischen den Sicken der Folgepolkontur und den Seitenflächen der Magnete ein Hohlraum oder Spalt ausgebildet, in den die freien Enden der Feder eingreifen. Die Feder liegt hierbei zur definierten Positionierung einerseits an der Seitenfläche des Magneten in Umfangsrichtung und auf der gegenüberliegenden Seite an der Innenfläche der Sicke an.

Damit das Federelement in Axialrichtung nicht verkippt, wenn die Schenkel an den Innenkanten der Sicken anliegen, greifen die freien Enden nicht vollständig bis an die Innenwand des Polgehäuses in den Spalt ein, sondern maximal bis zur halben radialen Tiefe des Spalts. Das Federelement kann optional auch in Kombination mit dem Einkleben der Permanentmagnete verwendet werden, um diese während des Klebevorgangs zuverlässig zu fixieren.

Zur zusätzlichen Positionierung der Federelemente sind am Polboden Anschläge ausgebildet, die eine radiale Bewegung des Federbügels nach innen verhindern. Diese können ohne zusätzlichen Bearbeitungsschritt als Durchzüge beim Tiefziehen des Polbodens an diesen angeformt werden.

Die erfindungsgemäße Schnittstelle zwischen den Gehäuseflanschen mit dem Verbindungsbereich und dem Übergangsbereich des Polgehäuses eignet sich besonders für eine modulare Bauweise von Getriebe-Antriebseinheiten mit unterschiedlichen Elektromotoren, die mit unterschiedlichen Getriebegehäusen kombiniert werden. Dabei kann immer ein Bürstenträger-Bauteil mit einem gleichen Grundkörper verwendet werden, der axial zwischen den beiden Gehäuseteilen, axial über den Flanschbereich hinweg angeordnet ist. Insbesondere kann das Getriebegehäuse unterschiedliche Elektroniken aufnehmen, beispielsweise eine Einschubelektronik oder eine integrierte Leiterplatte oder nur eine reduzierte Sensorik aufweisen. Ebenso ist ein Getriebegehäuse ohne Elektronik kombinierbar, bei der nur das Bürstenträgerbauteil direkt einen Anschluss-Stecker aufweist. Für die Elektromotoren kann sowohl das erfindungsgemäße Polgehäuse mit den Folgepolen, als auch ein 2-Pol oder 4-Pol Permanentmagnet-Poltopf verwendet werden. Durch die Modul-Bauweise können erheblich Entwicklungskosten gespart werden, und unterschiedliche Anwendungen ohne Umstellung der Produktionslinien zeitnah geliefert werden.

Durch das erfindungsgemäße Herstellungsverfahren des Polgehäuses werden mittels Tiefziehen in einem Arbeitsgang der Folgepolbereich, der Übergangsbereich und der Verbindungsbereich mit dem Flansch kostengünstig und präzise ausgebildet. Dabei kann die erfindungsgemäße Auslegung der konkreten Abmessungen bestimmter Komponenten im Verhältnis zu der maximalen Schlüsselweise bei minimalem Materialeinsatz durch die Auswahl des Tiefziehwerkzeugs realisiert werden. Beispielsweise können auch gleichzeitig die radialen Anschläge für die Bügelfeder mit angeformt werden, so dass die Magneten ohne Mehraufwand zuverlässig im Polgehäuse fixiert werden können.

Die axiale Montage des Rotors und des Bürstenhalterbauteils in das Polgehäuse ermöglicht eine eindeutig vorgebbare Flansch-Schnittsstelle, die sich besonders günstig für den modularen Baukasten zu Kombination verschiedener Polgehäuse und Getriebegehäuse eignet.

### Kurze Beschreibung der Zeichnungen

Ausführungen der Erfindung sind in den Zeichnungen dargestellt und in der nachfolgenden Beschreibung näher erläutert.

### Es zeigen

Figur 1: ein erstes Ausführungsbeispiel einer erfindungsgemäßen elektrischen Maschine
Figur 2: einen Querschnitt der Figur 1
Figur 3: schematisch einen Ausschnitt eines weiteren Ausführungsbeispiels
Figur 4: einen Längsschnitt durch ein Polgehäuse eines weiteren Ausführungsbeispiels
Figur 5 bis 7: verschiedene Detaildarstellungen einer erfindungsgemäßen Magnetbefestigungsfeder
Figur 8 bis 10: das erfindungsgemäße Montagekonzept und das Baukastensystem der unterschiedlichen Getriebe-Antriebseinheiten.

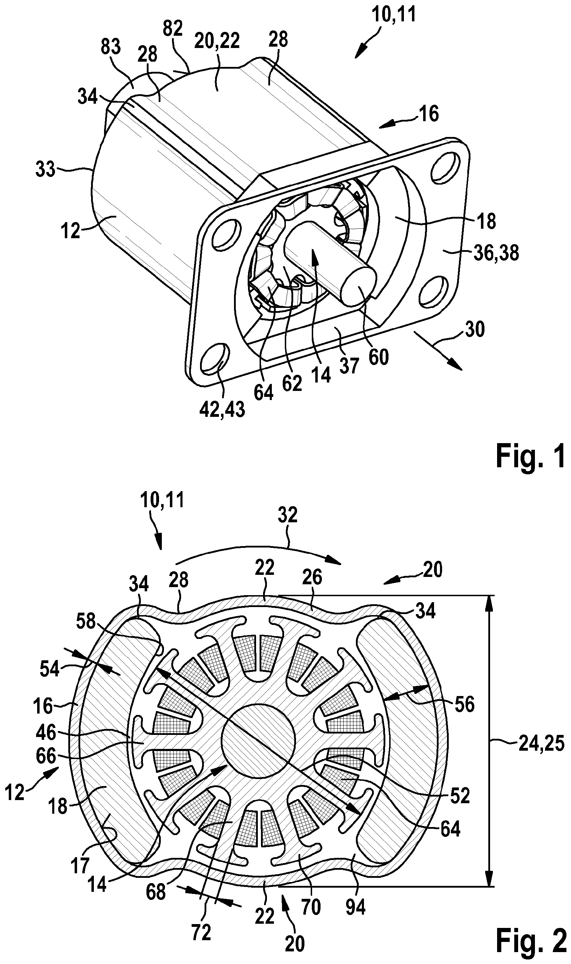

In Figur 1 ist eine erfindungsgemäße elektrische Maschine 10 dargestellt, die als Elektromotor 11 ausgebildet ist. Der Elektromotor 11 ist beispielsweise Bestandteil einer Getriebe-Antriebseinheit 130, wie sie zum Verstellen eines Schiebedachs, einer Scheibe oder eines Sitzteils im Kraftfahrzeug verwendet wird. Die elektrische Maschine10 weist einen Stator12 auf, bei dem zwei Permanentmagnete 18 in einem Polgehäuse 16 gegenüberliegend angeordnet sind. Zwischen den beiden sich gegenüberliegenden Permanentmagneten 18 sind zwei sich gegenüberliegende Folgepole 22 angeordnet, die durch die Gehäusewand 26 des Polgehäuses 16 gebildet werden. Hierzu sind in abgeflachte Bereiche 20 des Polgehäuses 16 jeweils zwei Sicken 28 ausgebildet, die sich in Axialrichtung 30 erstrecken. In Umfangsrichtung 32 ist zwischen den beiden Sicken 28 der Folgepol 22 als gewölbte Polgehäusewand 26 ausgebildet, die zusammen mit den Sicken 28 und einem Haltebereich 34 für die Permanentmagnete 18 den abgeflachten Bereich 20 des Polgehäuses 16 bildet. Das Polgehäuse 16 weist eine axial offene Seite 36 auf, an der ein Flansch 38 zur Verbindung mit einem weiteren Gehäuseteil 40 ausgebildet ist. Der Flansch 38 weist Aufnahmen 42 für Verbindungselemente auf, die beispielsweise als Bohrungen 43 ausgebildet sind. Durch diese Bohrungen 43 können als Verbindungselemente 142 bevorzugt Schrauben in einen korrespondierenden Gegenflansch 44 geschraubt werden. In den Stator 12 ist in Figur 1 ein Rotor 14 eingefügt, der einen kleinen radialen Luftspalt 46 zu den den Rotor 14 umgebenden Permanentmagneten 18 und Folgepolen 22 bildet.

In Figur 2 ist ein Schnitt quer zur Axialrichtung 30 durch den Stator12 und den Rotor 14 der Figur 1 dargestellt. Die Permanentmagnete 18 liegen an der Innenwand 17 des Polgehäuses 16 an und sind beispielsweise eingeklebt und/oder mittels Magnethaltefedern 90 im Polgehäuse 16 fixiert. Die beiden Permanentmagnete 18 sind in Radialrichtung 31 gleichsinnig magnetisiert, so dass beide beispielsweise an ihrer radialen Innenseite einen Südpol bilden. Über das Polgehäuse 16, das einen magnetischen Rückschluss bildet, wird ein magnetischer Kreis zu den Folgepolen 22 erzeugt, die dann beispielsweise an der Innenwand 17 des Polgehäuses 16 jeweils einen Nordpol bilden. Da im Bereich der Folgepole 22 keine Permanentmagnete 18 angeordnet sind, ist die maximale Abmessung 25 des Polgehäuses 16 zwischen den abgeflachten Bereichen 20 deutlich geringer, als in Richtung der beiden Permanentmagneten 18. Die maximale Abmessung 25 stellt eine Schlüsselweite 24 für den zur Verfügung stehenden Einbauraum dar, der erfindungsgemäß optimal an die entsprechende Anwendung, insbesondere an die Einbauposition im Kraftfahrzeug, angepasst wird. Erfindungsgemäß ist diese Schlüsselweite 24 immer kleiner als 35 mm, wobei hier der Rotordurchmesser 52 beispielsweise maximal 32 mm beträgt. Bei geringerem Leistungsbedarf der elektrischen Maschine 10 und/oder bei der Verwendung von Seltenenerden Magnetmaterial für die Permanentmagnete 18 kann die Schlüsselweite 24 auch maximal nur 30 mm betragen, wobei dann der Rotordurchmesser 52 maximal 28 mm beträgt. Die Schlüsselweite 24 ist definiert als die maximale radiale Abmessung 25 des Polgehäuses 16 zwischen den abgeflachten Bereichen 20, axial im Bereich der Folgepole 22. In Figur 2 ist die maximale radiale Abmessung 25 an den gewölbten Bereichen der Folgepole 22 in Umfangsrichtung 32 zwischen den Sicken 28 ausgebildet. In einer nicht dargestellten Ausführung kann die maximale radiale Abmessung 25 auch am Haltebereich 34 der Permanentmagnete 18 ausgebildet sein. Die Wandstärke 54 des Polgehäuses 16 wird bezüglich des Gewichts, des magnetischen Fluss und der Geräuschminimierung optimiert und beträgt 3% bis 4% der Schlüsselweite 24. Je nach konkreter Anwendung für unterschiedliche Leistungen kann die Wandstärke 54 auch zwischen 2% und 7%, beispielsweise zwischen 0,8 mm und 1,8 mm liegen. Dieses Maß für die Wandstärke 54 bezieht sich auf den Winkelbereich der Folgepole 22 und der Permanentmagnete 18. Da das Polgehäuse 16 als Tiefziehteil hergestellt wird, ist die Wandstärke 54 über den gesamten Umfang jedoch relativ konstant. Die radiale Wandstärke 56 der Permanentmagneten 18 beträgt aufgrund der erfindungsgemäßen Optimierung 15% bis 18% der Schlüsselweite 24, kann jedoch in Sonderfällen auch 10% bis 25 % der Schlüsselweite 24 betragen. Die Permanentmagnete 18 weisen eine so genannte Polabhebung 58 auf, so dass sich der Luftspalt 46 zwischen dem Rotor 14 und dem Permanentmagneten 18 in Umfangsrichtung 32 aufweitet. Der Rotor 14 weist eine Rotorwelle 60 auf, auf der ein Ankerpaket 62 zur Aufnahme von elektrischen Wicklungen 64 angeordnet ist. Hierzu weist das Ankerpaket 64 Rotorzähne 66 auf, die aus radialen Zahnschäften 68 gebildet sind, die von radial äußeren Zahnköpfen 70 abgeschlossen werden. Die elektrischen Wicklungen 64 sind radial innerhalb der Zahnköpfe 70 auf die Zahnschäfte 68 gewickelt. Die Zahnschaftbreite 72 in Umfangsrichtung 32 beträgt an der elektrischen Wicklung 64 bei der erfindungsgemäßen Optimierung 5% bis 7% der Schlüsselweite 24, je nach Leistungsbedarf und Verstellanwendung auch 3% bis 10% der Schlüsselweite 24.

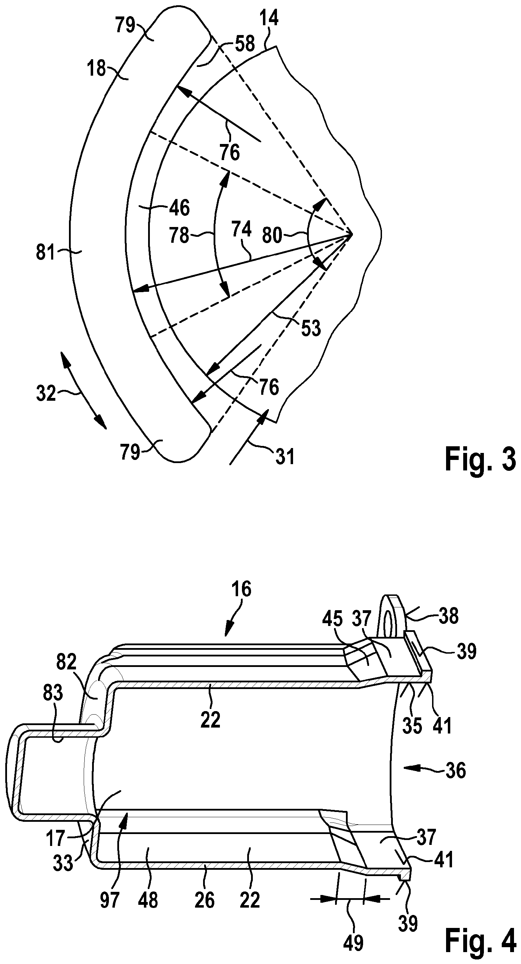

In Figur 3 ist als eine Variation der Erfindung ein vergrößerter Ausschnitt gemäß Figur 2 dargestellt, bei dem der schalenförmige Permanentmagnet 18 einen ersten Innenradius 74 aufweist, der höchstens 15% größer ist, als der Rotorradius 52. Der erste Innenradius 74 erstreckt sich über einen Winkelbereich 78 in Umfangsrichtung 32 von 50° bis 60° und ist bezüglich seiner Umfangsrichtung 32 in der Mitte 81 des Permanentmagneten 18 angeordnet. An den beiden äußeren Bereichen 79 bezüglich der Umfangsrichtung 32 weist die Innenkontur des Permanentmagneten 18 einen zweiten Innenradius 76 auf, der größer ist als der erste Innenradius 74. Bei dieser speziellen Ausführung der Polabhebung 58 mittels eines Doppelradius weitet sich der sehr dünne Luftspalt 46 im Mittelbereich 81 an den äußeren Rändern 79 des Permanentmagneten 18 sehr stark auf, so dass die Drehmomentenwelligkeit stark reduziert werden kann, ohne dass der magnetische Fluss zu stark abnimmt. Der Permanentmagnet 18 erstreckt sich mit seiner maximalen Ausdehnung in Umfangsrichtung 32 über einen gesamten Magnetwinkel 80, der größer ist als 90°. Die Geometrie des gegenüberliegenden Permanentmagneten 18 ist entsprechend symmetrisch ausgebildet.

In Figur 4 ist ein Längsschnitt des Polgehäuses 16 entlang der Rotorachse dargestellt. Gegenüber dem offenen Ende 36 weist das Polgehäuse 16 eine geschlossene Seite 33 mit einen geschlossenen Boden 82 auf, der in diesem Ausführungsbeispiel einstückig mit der umfänglichen Polgehäusewand 48 ausgebildet ist. Am Boden 82 ist eine Lageraufnahme 83 für ein Rotorlager 84 angeformt, in dem der Rotor 14 radial und optional auch axial gelagert ist. Das offene Ende 36 schließt axial mit dem Flansch 38 ab, der bezüglich des Umfangs an den abgeflachten Bereichen 20 zwei näherungsweise gerade parallele Außenseiten 39 aufweist. Axial schließt sich an den Flansch 38 ein Verbindungsbereich 37 an, in den das Bürstenhalter-Bauteil 86 aufgenommen wird. Der Verbindungsbereich 37 weist im Ausführungsbeispiel gerade parallele Innenflächen 35 mit einer Innenweite 137 auf, die mit der Innenkontur 41 des Flanschs 38 fluchten, in die das Bürstenhalter-Bauteil 86 eingefügt wird. Der Flansch 38 mit dem Verbindungsbereich 37 stellt eine normierte Schnittstelle 120 zu einem zu verbindenden Gehäuseteil 40 dar, das beispielsweise als Getriebegehäuse 101 ausgebildet ist. Zwischen der axialen Erstreckung der Folgepole 22 mit den axialen Sicken 28 und dem Verbindungsbereich 37 ist ein Übergangsbereich 45 ausgebildet, dessen maximale Abmessung 49 zwischen 4 mm und 13 mm beträgt. Im axialen Verlauf des Übergangbereichs 45 ändert sich die Kontur des Polgehäuses 16 von den axialen Sicken 28 mit den Innenkanten 97 des Folgepols 22 mit der äußeren maximalen Schlüsselweite 24 hin zu den beiden parallelen Innenflächen 35 des Verbindungsbereichs 37 mit der Innenweite 137. Daher ist der Übergangsbereich 45 konisch ausgebildet, bei dem sich der Innendurchmesser des Polgehäuses 16 aufweitet. Im Schnittbild ist auch die radiale Wandstärke 54 des Polgehäuses 16 gut zu erkennen, die hier näherungsweise über das gesamte Polgehäuse 16 gleich dick ausgebildet ist. Das Polgehäuse 16 ist im Tiefzieh-Verfahren hergestellt, insbesondere derart, dass auch die axialen Sicken 28 beim Tiefziehen mit ausgeformt werden. Daher weist das Polgehäuse16 in Axialrichtung 30 keinen Hinterschnitt auf.

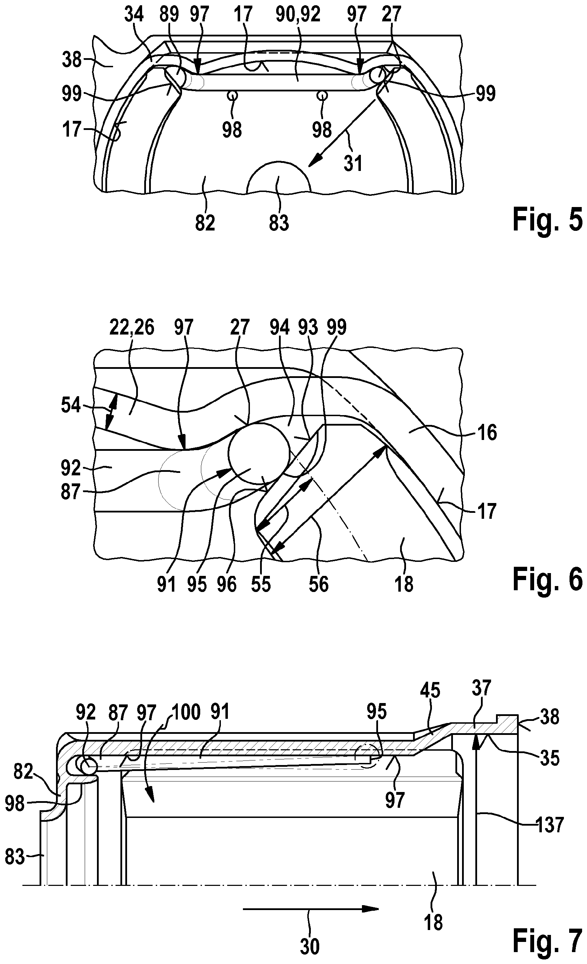

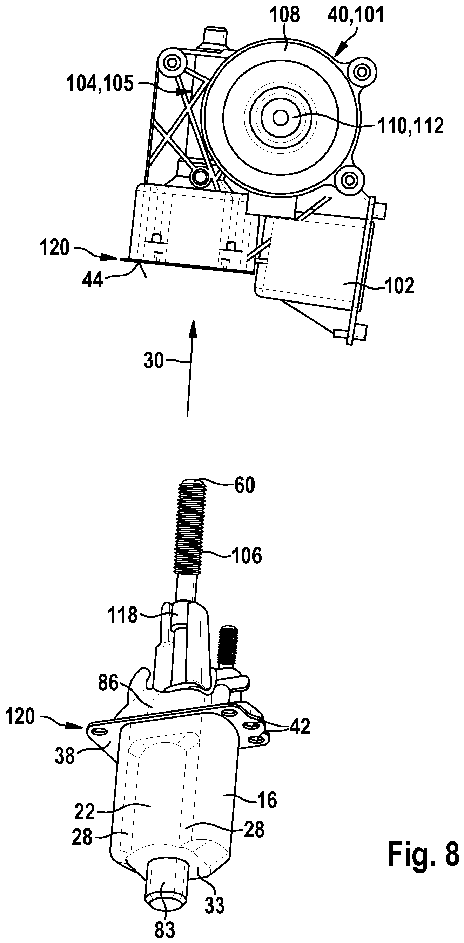

Figur 5 zeigt eine Draufsicht auf die offene Seite 36 des Stators 12, bei dem die Permanentmagnete 18 mittels Magnethaltefedern 90 im Polgehäuse 16 gehalten werden. Die Magnethaltefeder 90 weist zwei gegenüberliegende freie Schenkel 91 auf, die über einen Bügel 92 miteinander verbunden sind. Die freien Schenkel 91 liegen an den gegenüberliegenden Permanentmagneten 18 an und drücken diese zu deren Fixierung gegen die Innenwand 17 des Polgehäuses 16. Zwischen einer in Umfangsrichtung 32 weisenden Endseite 93 des äußeren Bereichs 79 und einer gegenüberliegenden Seitenfläche 27 der Sicke 28 ist ein Hohlraum 94 ausgeformt, in den der Schenkel 91 hinein ragt. Dabei liegt bevorzugt das freie Ende 95 des Schenkels 91 sowohl an der Endseite 93, als auch an der Seitenfläche 27 der Sicke 28 an, wie im vergrößerten Ausschnitt der Figur 6 sichtbar ist. Dabei ist insbesondere der Hohlraum 94 in radialer Richtung 31 keilförmig ausgebildet. Die Anlagefläche 99 der Schenkel 91 liegt in diesem Ausführungsbeispiel an einem radialen Innenbereich 96 der Endseite 93, bevorzugt innerhalb der radial inneren Hälfte 55 der radialen Wandstärke 56 der Permanentmagnete 18. der Querschnitt der Schenkel 91 ist beispielsweise rund ausgebildet, kann aber auch (halbrund 89) abgeflacht (wie in Figur 5 links dargestellt), oder als Flachprofil oder Mehrkantprofil ausgebildet sein und/oder auch eine strukturierte Oberfläche aufweisen, die besser an der Endseite 93 haftet. Ebenfalls kann an der Endseite 93 eine Struktur, beispielsweise eine Kerbe in Axialrichtung 30, ausgebildet sein, in die der Schenkel 91 eingreift. Die beiden benachbarten Sicken 28 bilden jeweils Innenkanten 97, an denen die Magnethaltefeder 90 anliegt. Damit der Bügel 92, der die beiden Schenkel 91 über die Innenkanten 97 hinweg verbindet, radial nicht nach innen rutscht, sind am Boden 82 des Polgehäuses 16 axiale Fortsätze als Anschläge 98 ausgebildet, an deren radialen Außenseite der Bügel 92 radial anliegt. Dadurch wird die Magnethaltefeder 90 radial zwischen den Anschlägen 98 und den Innenkanten 97 fixiert, wobei bevorzugt die Übergangsabschnitte 87 zwischen den Schenkeln 91 und dem Bügel 92 an den Innenkanten 97 anliegen. Der Anlagepunkt der Magnethaltefeder 90 an der Innenkante 97 bildet einen Kipp-Punkt für die Magnethaltefeder 90, wie dies schematisch in Figur 7 durch den Pfeil 100 gezeigt ist. Dadurch wird eine Verkippung der Magnethaltefeder 90 aus der Axialrichtung 30 minimiert. Zusätzlich oder alternativ kann eine solche stärkere axiale Verkippung auch durch eine entsprechende Gestaltung des Hohlraums 94 verhindert werden. Durch die Keilform des spaltförmigen Hohlraums 94, greifen die freien Enden 95 radial möglichst nur wenig tiefer in den Hohlraum 94 ein, als die radiale Position der Innenkanten 97. Wird der Hohlraum 94 - wie beschrieben - keilförmig ausgebildet, so dass der das freie Ende 95 an der Seitenfläche 27 und der Endseite 93 anliegt, kann durch die konkrete Ausgestaltung der Hohlraumgeometrie das tiefere radiale Eindringen des freien Endes 95 verhindert werden. Dabei liegt der Schenkel 91 radial möglichst weit innen an der Endseite 93 an. Die Kontur der Endseite 93 kann dabei entsprechend angepasst sein, beispielsweise ganz oder teilweise einen Winkel zur Radialrichtung 31 bilden. Des Weiteren kann die äußere oder innere Magnetkante des äußeren Bereichs 79 des Permanentmagnete18 entsprechend abgeschrägt sein. Der radiale Anschlag 98 ist beispielsweise einteilig mit dem Boden 82 ausgebildet, vorzugsweise als Durchzug beim Tiefziehen. Dabei kann für jeden Bügel 92 ein einziger, oder zwei, oder mehrere Anschläge 98 angeformt werden. In einer weiteren Variante liegt der Bügel 92 axial an der Innenwand des Bodens 82 an, der dann einen axialen Anschlag für die Magnethaltefeder 90 bildet. Zwischen den beiden Permanentmagneten 18 sind zwei Magnethaltefedern 90 eingespannt, die näherungsweise in einer Ebene liegen mit den abgeflachten Bereichen 20 des Polgehäuses16. In Figur 7 ist zu erkennen, dass sich hier die Permanentmagneten 18 axial über die Folgepole22 hinaus erstrecken in den Übergangsbereich 45 hinein, insbesondere axial bis zum Verbindungsbereich 37. Beim Herstellungsverfahren der elektrischen Maschine10 wird also das Polgehäuse 16 als Poltopf mit dem Flansch 36 und dem Verbindungsbereich 37 als definierte Schnittstelle 120 mittels Tiefziehen gefertigt, wobei die Sicken 28 und die Anschläge 98 in einem Arbeitsgang angeformt werden. Danach werden die Permanentmagnete 18 in das Polgehäuse 16 eingesetzt, wobei diese optional an dessen Innenwand 17 angeklebt werden. Zur Fixierung der Permanentmagnete 18 werden zwei Magnethaltefedern 90 in das Polgehäuse 16 eingeführt, derart, dass die Schenkel 91 an den Endseiten 93 der Permanentmagnete 18 anliegen, und diese gegen die Innenwand 17 des Polgehäuses 16 pressen. Dabei wird der Bügel 92 radial außerhalb der Anschläge 98 am Boden 82 positioniert, so dass der Bügel 92 insbesondere radial zwischen den Anschlägen 98 und der Innenkante 97 der Sicken 28 fixiert ist. Nach der Fixierung der Permanentmagnete 18 wird der Rotor 14 und das Bürstenträger-Bauteil 86 axial in das Polgehäuse 16 eingefügt, so das das Bürstenträger-Bauteil 86 im Verbindungsbereich 37 angeordnet ist und axial über den Flansch 38 heraus ragt. Danach wird ein weiteres Gehäuseteil 40, das als Getriebegehäuse 101 ausgebildet ist, axial über die Rotorwelle 60 auf das Bürstenträger-Bauteil 86 aufgesetzt, bis der Flansch 38 am Gegenflansch 44 des Gehäuseteils 40 anliegt. Danach werden Verbindungselemente 142 - bevorzugt Schrauben - in die Aufnahmen 42 des Flanschs 38 eingefügt und mit dem Gehäuseteil 40 verbunden. Dieses Montageverfahren ist in Figur 8 dargestellt, bei dem die Rotorwelle 60 ein Schnecke 106 aufweist und mittels eines Gleitlagers 116 - insbesondere eines Kalottenlagers - im Bürstenhalter-Bauteil 86 gelagert ist.

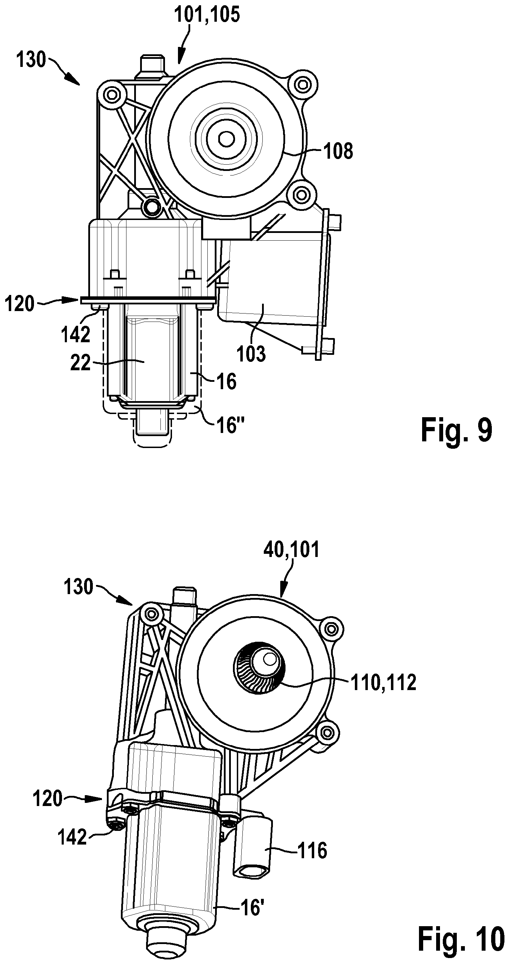

In Figur 8 ist eine fertig montierte Getriebe-Antriebseinheit 130 dargestellt, die als elektrische Maschine 10 einen Elektromotor 11 mit Folgepolen 22 aufweist, der in einem Gehäuseteil 40 angeflanscht ist, das als Getriebegehäuses 101 ausgebildet ist, in dem ein Getriebe 104 angeordnet ist. Das Getriebe 104 ist beispielsweise als Schneckengetriebe 105 ausgebildet, bei dem die auf der Rotorwelle 60 des Elektromotors 11 angeordnete Schnecke 106 mit einem im Getriebegehäuse 101 gelagerten Schneckenrad 108 kämmt. Vom Schneckenrad 108 wird das Antriebsmoment des Elektromotors 11 an ein Abtriebselement 110 - insbesondere ein Abtriebsritzel 112 - weitergeleitet, das beispielsweise das zu verstellende Teil - insbesondere im Kraftfahrzeug - antreibt. Das Polgehäuse 16 des Elektromotors 11 ist aus Metall hergestellt und dient als magnetischer Rückschluss. Das Getriebegehäuse 101 ist im Ausführungsbeispiel aus Kunststoff hergestellt, insbesondere mittels Spritzguss-Verfahren. Das Gehäuseteil 40 weist ein Elektronikgehäuse 102 zur Aufnahme einer Elektronikeinheit 103 auf, und ist als integraler Bestandteil des Getriebegehäuses 101 ausgebildet. Die Elektronikeinheit 103 ist in Figur 9 als Einschubelektronik ausgebildet, bei der eine Leiterplatte mit einem Steckerelement in die offene Schnittstelle 114 des integrierten Elektronikgehäuses 102 eingefügt wird. Auf der Leiterplatte können mehrere elektronische Bauteile angeordnet sein, beispielsweise ein Mikroprozessor, der zur Ansteuerung des Elektromotors 11 und/oder zur Auswertung eines Drehlagesignals der Rotorwelle 60 dient. Dabei kann auf der Leiterplatte ein Drehlagensensor angeordnet sein, der mit einem auf der Rotorwelle 60 angeordneten Signalgeber zusammenwirkt. Dadurch kann insbesondere eine Positionserfassung des Stellantriebs und/oder eine Einklemmschutzfunktion für die Getriebe-Antriebseinheit 130 realisiert werden.

In Figur 10 ist eine weitere Getriebe-Antriebseinheit 130 des erfindungsgemäßen Baukastens dargestellt, bei dem ein Getriebegehäuse 101 ohne Elektronikgehäuse ausgebildet ist. Dabei weist das Bürstenträger-Bauteil 86 einen Steckerabgang 116 auf, der radial an der definierten Schnittstelle 120 zwischen Polgehäuse16 und Getriebegehäuse 101 ragt. Eine solche Ausführung weist keine Elektronik, sondern lediglich eine Motorstromversorgung auf. Der Baukasten mit der definierten Schnittstelle 120 ermöglicht nun das Polgehäuse 16 mit den zwei Permanentmagneten 18 - insbesondere Ferritmagnete - und den zwei Folgepolen 22 mit unterschiedlichen Getriebegehäusen 101 zu kombinieren, die alle den identischen Gegenflansch 44, jedoch unterschiedliche Elektronikfunktionen aufweisen. Alternativ kann ein Getriebegehäuse 101 verwendet werden, das im Getriebe 104 eine Drehmomentsperre integriert hat. Ebenso können an ein bestimmtes Getriebegehäuse 101 - beispielsweise in Figur 9 - verschiedene Polgehäuse 16, 16' angeflanscht werden. Es kann ein erster erfindungsgemäßer Poltopf 16 mit den zwei Folgepolen 22 angeflanscht werden, oder alternativ kann an das identische Getriebegehäuse 101 ein anderer Elektromotor 11 - der zum Beispiel wie in Figur 10 keine Folgepole aufweist, sondern nur zwei Permanentmagnet-Pole, die insbesondere als Ferritmagnete ausgebildet sind - angeflanscht werden. Dies ist in Figur 9 durch den zweiten Poltopf 16' gestrichelt dargestellt. Dabei bilden der Flansch 38 und der Gegenflansch 44 immer die definierte identische Schnittstelle 120 mit identischen Verbindungselementen 142, wobei das Bürstenträger-Bauteil 86 entsprechend an die unterschiedlichen Elektronik-Varianten angepasst werden kann. Dabei passt das modifizierte Bürstenträger-Bauteil 86 immer in den Bauraum, der durch den Verbindungsbereich 37 des Polgehäuses 16 und die Innenkontur des korrespondierenden Gegenflansches 44 gebildet wird.

Es sei angemerkt, dass hinsichtlich der in den Figuren und in der Beschreibung gezeigten Ausführungsbeispiele vielfältige Kombinationsmöglichkeiten der einzelnen Merkmale untereinander möglich sind. So kann beispielsweise die Getriebe-Antriebseinheit 130 auch mit einer von einem Schneckengetriebe 105 abweichende Getriebeform ausgebildet sein. Die Struktur, Stabilität und Form des Gehäuseteils 40, sowie die Anordnung und Ausführung der Verbindungselemente 142 und deren Aufnahmen 42 an der Schnittstelle 120, können entsprechend den Anforderungen variiert werden. Die elektrische Maschine 10 findet vorzugsweise Anwendung für Stellantriebe im Kraftfahrzeug, beispielsweise zur Verstellung von Sitzteilen, Fensterscheiben Schiebedächern und Abdeckungen von Öffnungen, ist jedoch nicht auf solche Anwendungen beschränkt.

## Patentansprüche

1. Elektrische Maschine (10), insbesondere zum motorischen Verstellen beweglicher Teile im Kraftfahrzeug, mit einem Stator (12), in den ein Rotor (14) eingefügt ist, wobei der Stator (12) zwei radial gegenüberliegende Permanentmagnete (18) aufweist, die in einem einen magnetischen Rückschluss bildenden Polgehäuse (16) angeordnet sind, und das Polgehäuse (16) zwischen den beiden Permanentmagneten (18) abgeflachte Bereiche (20) aufweist, an denen die Polgehäusewand (26) zwei radial gegenüberliegende magnetische Folgepole (22) ausbildet, wobei jeder der beiden abgeflachten Bereiche (20) des Polgehäuses (16) zwei etwa parallel in Axialrichtung (30) verlaufenden Sicken (28) aufweist, die die Innenkontur der Folgepole (22) und den Übergang zu Haltebereichen (34) der Permanentmagnete (18) bilden,
**dadurch gekennzeichnet, dass** die maximale radiale Abmessung (25) des Polgehäuses (16) zwischen den beiden gegenüberliebenden abgeflachten Bereichen (20) - axial im Bereich der Folgepole (22) - eine Schlüsselweite (24) für den Einbauraum der elektrischen Maschine (10) bildet, die maximal 35 mm beträgt, und das Polgehäuse (16) an einem ersten axialen Ende (33) geschlossen ist, wobei ein Polgehäuseboden (82) einstückig mit dem Polgehäuse (16) ausgebildet ist, und an diesem Ende (33) eine Aufnahme (83) für ein Lager des Rotors (14) angeordnet ist, wobei das gegenüberliegende zweite axiale Ende (36) offen ausgebildet ist und einen Flansch (38) aufweist, der mit einem weiteren Gehäuseteil (40) verbindbar ist, wobei an den Flansch axial ein Verbindungsbereich (37) anschließt und zwischen dem Verbindungsbereich (37) und den Sicken (28) ein axialer Übergangsbereich (45) ausgebildet ist, bei dem sich die maximale Abmessung (25) zwischen den abgeflachten Seiten (20) ausgehend von den axialen Sicken (28) mit Innenkanten (97) des Folgepols (22) auf eine Innenweite (137) des Verbindungsbereichs (37) mit zwei näherungsweise parallel gegenüberliegenden Innenflächen (35) entlang der Axialrichtung (30) vergrößert, wobei die Permanentmagnete (18) mittels Magnethaltefedern (90) im Polgehäuse (16) fixiert werden, deren beide Schenkel (91) jeweils die gegenüberliegenden Permanentmagnete (18) gegen die Innenwand (17) des Polgehäuses (16) pressen, wobei zwischen den Endseiten (93) der Permanentmagnete (18) in Umgangsrichtung (32) und den Sicken (28) ein Hohlraum (94) gebildet wird, in den die Schenkel (91) eingreifen.

2. Elektrische Maschine (10) nach Anspruch 1, **dadurch gekennzeichnet, dass** die Wandstärke (54) des Polgehäuses (16) 2% bis 7 % - insbesondere 3% bis 4% - der Schlüsselweite (24) beträgt.

3. Elektrische Maschine (10) nach einem der Ansprüche 1 oder 2, **dadurch gekennzeichnet, dass** die radiale Wandstärke (56) der Permanentmagnete (18) 10% bis 25 % - insbesondere 15% bis 18% - der Schlüsselweite (24) beträgt, und vorzugsweise die Permanentmagnete (18) als Ferritmagnete ausgebildet sind.

4. Elektrische Maschine (10) nach einem der vorhergehenden Ansprüche,
**dadurch gekennzeichnet, dass** der Rotor (14) zur Aufnahme elektrischer Wicklungen (64) - vorzugsweise zehn - Rotorzähne (66) aufweist, die als radiale Zahnschäfte (68) mit radial außen angeordneten Zahnköpfen (70) ausgebildet sind, wobei die Zahnschaftbreite (72) in Umfangsrichtung (32) 3% bis 10 % - insbesondere 5% bis 7% - der Schlüsselweite (24) beträgt.

5. Elektrische Maschine (10) nach einem der vorhergehenden Ansprüche,
**dadurch gekennzeichnet, dass** der Permanentmagnet (18) näherungsweise ein Segment eines Kreisrings bildet, dessen mittlerer Bereich (81) einen ersten Innenradius (74) aufweist, der geringer ist, als ein zweiter Innenradius (76) an den beiden bezüglich der Umfangsrichtung (32) äußeren Bereichen (79) des Permanentmagneten (18), wobei insbesondere der erste Innenradius (74) um maximal 15 % größer ist, als der Außenradius (52) des Rotors (14).

6. Elektrische Maschine (10) nach einem der vorhergehenden Ansprüche,
**dadurch gekennzeichnet, dass** der mittlere Bereich (81) des Permanentmagneten (18) mit dem ersten Innendurchmesser (74) einen Winkelbereich (78) von 50° bis 60° umfasst, an den sich an beiden Seiten die äußeren Bereiche (79) mit dem zweiten Innenradius (76) anschließen, wobei insbesondere die gesamte Ausdehnung (80) des Permanentmagneten (18) in Umfangsrichtung (32) näherungseise 90° beträgt.

7. Elektrische Maschine (10) nach einem der vorhergehenden Ansprüche, **dadurch gekennzeichnet, dass** das weitere Gehäuseteil (40) ein Getriebegehäuse (101) ist.

8. Elektrische Maschine (10) nach einem der vorhergehenden Ansprüche, **dadurch gekennzeichnet, dass** der axiale Übergangsbereich (45) konisch ausgebildet ist und sich 4 mm bis 13 mm erstreckt.

9. Elektrische Maschine (10) nach einem der vorhergehenden Ansprüche, **dadurch gekennzeichnet, dass** im Verbindungsbereich (37) ein Bürstenhalter-Bauteil (86) aufgenommen wird, das sich von dem Innenraum des Polgehäuses (16) axial über den Flansch (38) hinaus in das mit diesem verbundene Gehäuseteil (40) erstreckt.

10. Elektrische Maschine (10) nach einem der vorhergehenden Ansprüche, **dadurch gekennzeichnet, dass** der Flansch (38) in einem Winkelbereich der Folgepole (22) zwei parallel gegenüberliegende Umfangsseiten (39) und in dem Winkelbereich (78, 80) der Permanentmagnete (18) gegenüberliegend mehrere Aufnahmen (42) für Verbindungselemente (142) zur Fixierung des sich axial anschließende Gehäuseteils (40) aufweist.

11. Elektrische Maschine (10) nach einem der vorhergehenden Ansprüche, **dadurch gekennzeichnet, dass** die axial freien Enden (95) der Schenkel (91) jeweils an einem radial inneren Bereich (96) der Endseiten (93) - insbesondere der radial inneren Hälfte (55) - an den Endseiten (93) anliegen, und im Übergangsabschnitt (87) zu dem Bügel (92) hin an Innenkanten (97) der Sicken (28) anliegen, wobei vorzugsweise die axial freien Enden (95) der Schenkel (91) gleichzeitig an der in Umfangsrichtung (32) den Endseiten (93) gegenüberliegenden Seitenfläche (27) der Sicken (28) anliegen.

12. Elektrische Maschine (10) nach einem der vorhergehenden Ansprüche, **dadurch gekennzeichnet, dass** an der geschlossenen Seite (33) des Polgehäuses (16) an dessen Innenseite - vorzugsweise einteilig mit dem Polgehäuse (16) gefertigte - Anschläge (98) ausgebildet sind, an denen der zwischen den beiden Schenkeln (91) angeordnete Bügel (92) radial anliegt, um ein Verkippen des Bügels (92) radial nach Innen zu vermeiden, wobei insbesondere der Bügel (92) axial am Polgehäuseboden (82) anliegt.

13. Baukastensystem zur Ausbildung unterschiedlicher Getriebe-Antriebseinheiten (130), wobei das Baukastensystem eine Getriebe-Antriebseinheit (130) aufweist, die als elektrische Maschine (10) eine elektrische Maschine (10) gemäß Anspruch 1 aufweist, wobei unterschiedliche Polgehäuse (16) der elektrischen Maschine (10) gemäß Anspruch 1 einen identischen Flansch (38) und einen identischen Verbindungsbereich (37) aufweisen, die kompatibel sind mit den identisch ausgebildeten Gegenflanschen (44) unterschiedlicher Getriebegehäuse.

14. Verfahren zum Herstellen einer elektrischen Maschine (10) - insbesondere einem Stellantrieb im Kraftfahrzeug - nach einem der vorhergehenden Ansprüche, **gekennzeichnet durch** folgende Verfahrensschritte:
- Ausbilden eines metallischen Polgehäuses (16) mittels Tiefziehen, wobei Sicken (28) zur Ausbildung von Folgepolen (22) ausgebildet werden, und insbesondere am Inneren des Polgehäuseboden (82) axiale Fortsätze (98) zum Flansch (38) hin einstückig angeformt werden
- Einsetzen der Permanentmagnete (18) in das Polgehäuse (16), - vorzugsweise mittels Verwendung von Klebstoff - wobei insbesondere die Permanentmagnete (18) bezüglich der Radialrichtung (31) gleichsinnig magnetisiert werden
- Einfügen der Magnethaltefedern (90) derart, dass die freien Enden (95) der Schenkel (91) an den Endseiten (93) der Permanentmagnete (18) in Umfangsrichtung (32) anliegen, und der Bügel (92) radial außerhalb der axialen Fortsätze (98) radial an diesen anliegt.

15. Verfahren nach Anspruch 14,
**dadurch gekennzeichnet, dass** der Rotor (14) mit einem eine Rotorwelle (60) umschließenden Bürstenhalter-Bauteil (86) in den Verbindungsbereich (37) des Polgehäuses (16) axial eingefügt wird, derart, dass das Bürstenträger-Bauteil (86) aus dem Polgehäuse (16) ragt, und anschließend ein Getriebegehäuseteil (101) axial auf das Bürstenträger- Bauteil (86) aufgesetzt wird, und mit einem Gegenflansch (44) am Flansch (38) des Polgehäuses (16) befestigt wird.

## Claims

1. Electric machine (10), in particular for the motor-operated adjustment of movable parts in a motor vehicle, comprising a stator (12), into which a rotor (14) is inserted, wherein the stator (12) has two radially opposite permanent magnets (18), which are arranged in a pole housing (16) forming a magnetic return path, and the pole housing (16) has flattened regions (20) between the two permanent magnets (18), with the pole housing wall (26) forming two radially opposite magnetic consequent poles (22) on said regions, wherein each of the two flattened regions (20) of the pole housing (16) has two beads (28) which extend approximately parallel to one another in the axial direction (30) and which form the inner contour of the consequent poles (22) and the transition to holding regions (34) of the permanent magnets (18), **characterized in that** the maximum radial dimension (25) of the pole housing (16) between the two mutually opposite flattened regions (20), axially in the region of the consequent poles (22), forms a width across flats (24) for the installation space of the electric machine (10), which is at most 35 mm, and the pole housing (16) is closed at a first axial end (33), wherein a pole housing base (82) is formed in one piece with the pole housing (16), and a receptacle (83) for a bearing of the rotor (14) is arranged at this end (33), wherein the opposite second axial end (36) is formed so as to be open and has a flange (38), which is connectable to a further housing part (40), wherein a connecting region (37) axially adjoins the flange and an axial transition region (45) is formed between the connecting region (37) and the beads (28), in which axial transition region the maximum dimension (25) between the flattened sides (20) increases along the axial direction (30), starting from the axial beads (28) with inner edges (97) of the consequent pole (22) towards an inner width (137) of the connecting region (37) with two inner faces (35) which are opposite one another approximately parallel to one another, wherein the permanent magnets (18) are fixed in the pole housing (16) by means of magnetic holding springs (90), the two limbs (91) of said magnetic holding springs each pressing the opposite permanent magnets (18) against the inner wall (17) of the pole housing (16), wherein a cavity (94) is formed between the end sides (93) of the permanent magnets (18) in the circumferential direction (32) and the beads (28), into which cavity the limbs (91) engage.

2. Electric machine (10) according to Claim 1, **characterized in that** the wall thickness (54) of the pole housing (16) is 2% to 7%, in particular 3% to 4%, of the width across flats (24).

3. Electric machine (10) according to either of Claims 1 and 2, **characterized in that** the radial wall thickness (56) of the permanent magnets (18) is 10% to 25%, in particular 15% to 18%, of the width across flats (24), and preferably the permanent magnets (18) are in the form of ferrite magnets.

4. Electric machine (10) according to one of the preceding claims, **characterized in that** the rotor (14) has preferably ten rotor teeth (66) for receiving electrical windings (64), which rotor teeth are in the form of radial tooth shafts (68) with tooth tips (70) arranged radially on the outside, wherein the tooth shaft width (72) in the circumferential direction (32) is 3% to 10%, in particular 5% to 7%, of the width across flats (24) .

5. Electric machine (10) according to one of the preceding claims, **characterized in that** the permanent magnet (18) forms approximately a segment of a circular ring, the central region (81) of said segment having a first inner radius (74) which is smaller than a second inner radius (76) at the two outer, with respect to the circumferential direction (32), regions (79) of the permanent magnet (18), wherein in particular the first inner radius (74) is at most 15% larger than the outer radius (52) of the rotor (14).

6. Electric machine (10) according to one of the preceding claims, **characterized in that** the central region (81) of the permanent magnet (18) with the first inner diameter (74) comprises an angular range (78) of 50° to 60°, which is adjoined on both sides by the outer regions (79) with the second inner radius (76), wherein in particular the total extent (80) of the permanent magnet (18) in the circumferential direction (32) is approximately 90°.

7. Electric machine (10) according to one of the preceding claims, **characterized in that** the further housing part (40) is a gear housing (101).

8. Electric machine (10) according to one of the preceding claims, **characterized in that** the axial transition region (45) is conical and extends 4 mm to 13 mm.

9. Electric machine (10) according to one of the preceding claims, **characterized in that** a brushholder component part (86) is received in the connecting region (37), said brushholder component part extending axially from the interior of the pole housing (16) beyond the flange (38) into the housing part (40) connected to said flange.

10. Electric machine (10) according to one of the preceding claims, **characterized in that** the flange (38) has, in an angular range of the consequent poles (22), two circumferential sides (39) which are opposite one another and parallel to one another and, in the angular range (78, 80) of the permanent magnets (18), opposite, a plurality of receptacles (42) for connecting elements (142) for fixing the axially connecting housing part (40) .

11. Electric machine (10) according to one of the preceding claims, **characterized in that** the axially free ends (95) of the limbs (91) each bear against the end sides (93) in a radially inner region (96) of the end sides (93), in particular the radially inner half (55), and bear against inner edges (97) of the beads (28) in the transition section (87) to the bow (92), wherein preferably the axially free ends (95) of the limbs (91) at the same time bear against that side face (27) of the beads (28) which is opposite the end sides (93) in the circumferential direction (32).

12. Electric machine (10) according to one of the preceding claims, **characterized in that** stops (98) are formed on the closed side (33) of the pole housing (16) on the inner side thereof, which stops are preferably manufactured in one part with the pole housing (16), with the bow (92) arranged between the two limbs (91) bearing radially against said stops in order to avoid tipping of the bow (92) radially inwards, wherein in particular the bow (92) bears axially against the pole housing base (82) .

13. Modular system for forming different gear/drive units (130), wherein the modular system has a gear/drive unit (130) which has an electric machine (10) according to Claim 1 as an electric machine (10), wherein different pole housings (16) of the electric machine (10) according to Claim 1 have an identical flange (38) and an identical connecting region (37), which are compatible with the identically designed opposing flanges (44) of different gear housings.

14. Method for producing an electric machine (10), in particular a servo drive in a motor vehicle, according to one of the preceding claims, **characterized by** the following method steps:
- forming a metallic pole housing (16) by means of deep-drawing, wherein beads (28) for forming consequent poles (22) are formed, and in particular axial protrusions (98) towards the flange (38) are formed integrally on the interior of the pole housing base (82),
- inserting the permanent magnets (18) into the pole housing (16), preferably by means of using adhesive, wherein in particular the permanent magnets (18) are magnetized in the same sense with respect to the radial direction (31),
- introducing the magnetic holding springs (90) in such a way that the free ends (95) of the limbs (91) bear against the end sides (93) of the permanent magnets (18) in the circumferential direction (32), and the bow (92) bears radially against the axial projections (98) radially outside said axial projections.

15. Method according to Claim 14, **characterized in that** the rotor (14) is introduced axially, with a brushholder component part (86) surrounding a rotor shaft (60), into the connecting region (37) of the pole housing (16) in such a way that the brushholder component part (86) protrudes out of the pole housing (16), and then a gear housing part (101) is positioned axially on the brushholder component part (86) and is fastened with an opposing flange (44) on the flange (38) of the pole housing (16).

## Revendications

1. Machine électrique (10), en particulier pour le réglage motorisé de pièces mobiles dans un véhicule automobile, comprenant un stator (12) dans lequel est inséré un rotor (14), le stator (12) présentant deux aimants permanents (18) radialement opposés qui sont disposés dans une carcasse polaire (16) formant un retour magnétique, et la carcasse polaire (16) réalisant entre les deux aimants permanents (18) des zones aplaties (20) au niveau desquelles la paroi de carcasse polaire (26) réalise deux pôles conséquents magnétiques (22) radialement opposés, chacune des deux zones aplaties (20) de la carcasse polaire (16) présentant deux creux (28) s'étendant approximativement en parallèle dans la direction axiale (30) et formant le contour intérieur des pôles conséquents (22) et la transition vers des zones de retenue (34) des aimants permanents (18),
**caractérisée en ce que** la dimension radiale maximale (25) de la carcasse polaire (16) entre les deux zones aplaties opposées (20) - axialement au niveau des pôles conséquents (22) - forme une cote sur plats (24) pour l'espace de montage de la machine électrique (10) qui est au maximum égale à 35 mm, et la carcasse polaire (16) est fermée à une première extrémité axiale (33), un fond de carcasse polaire (82) étant réalisé d'un seul tenant avec la carcasse polaire (16), et un logement (83) pour un palier du rotor (14) étant disposé à cette extrémité (33), la deuxième extrémité axiale opposée (36) étant réalisée de manière ouverte et présentant une bride (38) qui peut être reliée à une autre partie de carter (40), dans laquelle une zone de raccordement (37) est axialement adjacente à la bride, et entre la zone de raccordement (37) et les creux (28) une zone de transition axiale (45) est réalisée au niveau de laquelle la dimension maximale (25) entre les faces aplaties (20) augmente en partant des creux axiaux (28) avec des bords intérieurs (97) du pôle conséquent (22) jusqu'à une largeur intérieure (137) de la zone de raccordement (37) avec deux faces intérieures opposées (35) approximativement parallèles le long de la direction axiale (30), les aimants permanents (18) étant fixés dans la carcasse polaire (16) au moyen de ressorts de retenue d'aimant (90) dont les deux branches (91) poussent respectivement les aimants permanents opposés (18) contre la paroi intérieure (17) de la carcasse polaire (16), dans laquelle, entre les faces d'extrémité (93) des aimants permanents (18) dans la direction circonférentielle (32) et les creux (28) est formée une cavité (94) dans laquelle les branches (91) viennent en prise.

2. Machine électrique (10) selon la revendication 1, **caractérisée en ce que** l'épaisseur de paroi (54) de la carcasse polaire (16) est de 2 % à 7 % - en particulier de 3 % à 4 % - de la cote sur plats (24).

3. Machine électrique (10) selon l'une quelconque des revendications 1 et 2, **caractérisée en ce que** l'épaisseur de paroi radiale (56) des aimants permanents (18) est de 10 % à 25 % - en particulier de 15 % à 18 % - de la cote sur plats (24), et **en ce que** les aimants permanents (18) sont de préférence réalisés sous forme d'aimants de ferrite.

4. Machine électrique (10) selon l'une quelconque des revendications précédentes, **caractérisée en ce que** pour recevoir des enroulements électriques (64), le rotor (14) présente des dents de rotor (66), de préférence dix, qui sont réalisées sous forme de tiges de dent radiales (68) dotées de têtes de dent (70) disposées radialement à l'extérieur, la largeur de tige de dent (72) dans la direction circonférentielle (32) étant de 3 % à 10 % - en particulier de 5 % à 7 % - de la cote sur plats (24).

5. Machine électrique (10) selon l'une quelconque des revendications précédentes, **caractérisée en ce que** l'aimant permanent (18) forme approximativement un segment d'un anneau de cercle dont la zone centrale (81) présente un premier rayon intérieur (74) qui est inférieur à un deuxième rayon intérieur (76) sur les deux zones (79), extérieures par rapport à la direction circonférentielle (32), de l'aimant permanent (18), le premier rayon intérieur (74) étant en particulier au maximum supérieur de 15 % au rayon extérieur (52) du rotor (14).

6. Machine électrique (10) selon l'une quelconque des revendications précédentes, **caractérisée en ce que** la zone centrale (81) de l'aimant permanent (18) définit avec le premier diamètre intérieur (74) une plage angulaire (78) de 50° à 60° qui est suivie sur les deux côtés des zones extérieures (79) ayant le deuxième rayon intérieur (76), l'étendue totale (80) de l'aimant permanent (18) dans la direction circonférentielle (32) étant en particulier approximativement égale à 90°.

7. Machine électrique (10) selon l'une quelconque des revendications précédentes, **caractérisée en ce que** l'autre partie de carter (40) est un carter de transmission (101).

8. Machine électrique (10) selon l'une quelconque des revendications précédentes, **caractérisée en ce que** la zone de transition axiale (45) est réalisée de manière conique et s'étend sur 4 mm à 13 mm.

9. Machine électrique (10) selon l'une quelconque des revendications précédentes, **caractérisée en ce que** dans la zone de raccordement (37) un composant porte-balais (86) est reçu qui s'étend de l'espace intérieur de la carcasse polaire (16) axialement au-delà de la bride (38) dans la partie de carter (40) raccordée à celui-ci.

10. Machine électrique (10) selon l'une quelconque des revendications précédentes, **caractérisée en ce que** la bride (38) présente dans une plage angulaire des pôles conséquents (22) deux faces circonférentielles (39) opposées en parallèle et dans une plage angulaire (78, 80) des aimants permanents (18) plusieurs logements (42) à l'opposé pour des éléments de raccordement (142) destinés à la fixation de la partie de carter (40) axialement adjacente.

11. Machine électrique (10) selon l'une quelconque des revendications précédentes, **caractérisée en ce que** les extrémités axialement libres (95) des branches (91) sont respectivement adjacentes aux faces d'extrémité (93) au niveau d'une zone radialement intérieure (96) des faces d'extrémité (93), en particulier de la moitié radialement intérieure (55), et sont adjacentes aux bords intérieurs (97) des creux (28) dans la partie de transition (87) vers l'étrier (92), les extrémités (95) axialement libres des branches (91) étant de préférence adjacentes en même temps à la face latérale (27) des creux (28), opposée aux faces d'extrémité (93) dans la direction circonférentielle (32).

12. Machine électrique (10) selon l'une quelconque des revendications précédentes, **caractérisée en ce que** sur la face fermée (33) de la carcasse polaire (16), sur la face intérieure de celle-ci, sont réalisées des butées (98) - de préférence fabriquées d'un seul tenant avec la carcasse polaire (16) - auxquelles l'étrier (92) disposé entre les deux branches (91) est radialement adjacent pour empêcher un basculement de l'étrier (92) radialement vers l'intérieur, l'étrier (92) étant en particulier adjacent axialement au fond de carcasse polaire (82).

13. Système modulaire pour réaliser différentes unités d'entraînement de transmission (130), le système modulaire présentant une unité d'entraînement de transmission (130) qui présente comme machine électrique (10) une machine électrique (10) selon la revendication 1, différentes carcasses polaires (16) de la machine électrique (10) selon la revendication 1 présentant une bride identique (38) et une zone de raccordement (37) identique qui sont compatibles avec les contre-brides (44) de différents carters de transmission réalisées de manière identique.

14. Procédé de fabrication d'une machine électrique (10)
- en particulier d'un servomoteur dans un véhicule automobile - selon l'une quelconque des revendications précédentes, **caractérisé par** les étapes de procédé suivantes consistant à :
- réaliser une carcasse polaire métallique (16) par emboutissage, dans lequel des creux (28) sont réalisées pour réaliser des pôles conséquents (22), et en particulier à l'intérieur du fond de carcasse polaire (82), des saillies axiales (98) sont rapportées d'un seul tenant en direction de la bride (38),
- placer les aimants permanents (18) dans la carcasse polaire (16) - de préférence en utilisant un adhésif - les aimants permanents (18) étant en particulier aimantés dans le même sens par rapport à la direction radiale (31),
- insérer les ressorts de retenue d'aimant (90) de telle sorte que les extrémités libres (95) des branches (91) sont adjacentes aux faces d'extrémité (93) des aimants permanents (18) dans la direction circonférentielle (32), et l'étrier (92) est radialement adjacent à ceux-ci radialement à l'extérieur des saillies axiales (98).

15. Procédé selon la revendication 14, **caractérisé en ce que** le rotor (14) doté d'un composant porte-balais (86) entourant un arbre de rotor (60) est inséré axialement dans la zone de raccordement (37) de la carcasse polaire (16) de telle sorte que le composant porte-balais (86) dépasse de la carcasse polaire (16), et ensuite, une partie de carter de transmission (101) est posée axialement sur le composant porte-balais (86) et est fixée à la bride (38) de la carcasse polaire (16) à l'aide d'une contre-bride (44).
